Europäisches Patentamt

European Patent Office

Office européen des brevets

(19)

(11) Publication number: **0 182 563**
**A2**

(12) # EUROPEAN PATENT APPLICATION

(21) Application number: **85308177.6**

(22) Date of filing: **08.11.85**

(51) Int. Cl.⁴: **A 21 C 3/02**

(30) Priority: **13.11.84 US 670833**

(43) Date of publication of application: **28.05.86**
**Bulletin 86/22**

(84) Designated Contracting States: **AT BE CH DE FR GB IT LI LU NL SE**

(71) Applicant: **NABISCO BRANDS INC., Nabisco Brands Plaza, Parsippany New Jersey 07054 (US)**

(72) Inventor: **Spinelli, Louis A., 424 East 21st Street Patterson, New Jersey 07513 (US)**
Inventor: **Jenniges, Jeffrey M., 100 Pierson-Miller Road Apt. 30F, Pompton Lakes New Jersey (US)**

(74) Representative: **Thomas, Roger Tamlyn et al, D. Young & Co. 10 Staple Inn, London WC1V 7RD (GB)**

(54) **Apparatus and method of machining doughy material.**

(57) A method and apparatus for maintaining constant mass flow rate in a dough machining process which includes delivering a doughy mass continuously at a constant rate and continuously adjusting each of the machining elements in the process independently in response to changes in the transfer characteristics of the dough to maintain a constant rate of mass flow.

EP 0 182 563 A2

APPARATUS AND METHOD OF

MACHINING DOUGHY MATERIAL

BACKGROUND OF THE INVENTION

The present invention relates to the art of preparing dough in a continuous sheet, and, in particular, to an improved system for controlling the mass flow rate of a sheet of dough.

In the art of preparing doughy material, such as for baking, etc., it is known to move a continuous sheet of doughy material, supplied as a thick slab, on a moving supported surface and to reduce the thickness as the dough is moved along by various operations such as by use of compression reduction rolls which simultaneously transfer the sheet of dough and reduces its thickness and by use of conveyors having progressively higher velocities than previous conveyors.

For example, U.S. Patent No. 4,421,776 to Brinkers et al discloses a method and device for rolling a dough mass into a continuous sheet whereby the dough mass is contacted on a moving supported surface with a series of rotatable rolling rolls which, as seen in the direction of movement of the supporting surface, are situated progressively closer to said supporting surface, the rolls being simultaneously moved along with a linear velocity which is greater than the velocity of movement of the supporting surface. U.S. Patent No. 4,276,317 to Hayashi discloses a method for processing dough wherein the dough is formed into a strip and stretched by applying pulling forces to the dough strip while simultaneously applying repeated compressive forces to the strip.

U.S. Patent No. 4,266,920 to Hayashi et al. shows a method and apparatus for continuously manufacturing multilayered dough materials which includes the steps of extruding dough material in a tubular form onto a conveyor belt, stretching the material into a thin strip during transportion, folding and piling up the strip of material. Similarly, U.S. Patent No. 4,192,636 to Hayashi et al. also shows an apparatus for continuously stretching dough for cakes, bread, and the like which has a plurality of rollers progressing along a closed orbit, including a lower straight portion, a plurality of conveyor belts positioned thereunder, and an upper flight of conveyor belts being spaced apart from each other. Other disclosures such as U.S. Patent No. 2,735,379 to Stiles describes a method and apparatus for sheeting dough whereby a conveyed elongated body of dough which has been subjected to an initial sheeting operation is further sheeted into a desired lesser thickness on a continuous basis by use of an overhead pressure device such as a reciprocating roller.

More recently, a method and apparatus for controlling the feed of a sheet of biscuit dough to a pair of gage rollers has been disclosed in U.K. Patent Application 2,078,403A wherein the speed of a sheet of biscuit dough progressing through gage rollers to a cutting apparatus is automatically adjusted to compensate variations in the thickness of the sheet emerging from the gage rollers.

Specifically, the power consumed by/or the torque applied to an electrical drive unit which drives the gage rollers is measured, such as by a current sensor, to produce an electrical signal proportional to the power or torque required. The signal is compared with a set value and utilized to adjust the feed of the sheet by varying the speed of the feed rollers.

A problem incurred in all of the above types of dough sheeting or machining process is the lack of control of the mass flow of material as it progresses through the entire system. Weight variations in a sheet of dough can be caused by many factors such as density distribution based on variations in occluded gas cells in the dough, variations in back pressure on metering rolls occasioned by receding feed hopper levels, gaps and/or tears in the dough sheet deposited on the moving surface, sudden velocity variations in conveyors, edge folds, overlaps, wrinkle or stretch areas, etc. Generally, operators attempt to correct observed flow changes by varying process transfer elements which result in uncontrollable oscillations in dough sheet flow. This lack of control is exacerbated by a cascading effect which requires adjustment of each of the process or apparatus elements throughout the system. This cascading effect is generally initiated at somewhere down the line and a several process steps leading to the first adjustment must be changed in series to compensate for the first required change. This results in an uneven and basically uncontrolled rate of mass flow through the machine.

Ways were therefore sought of:-

(a) overcoming the problem of controlling with greater precision the mass flow rate of dough material through a dough machining process ;

(b) maintaining uniform final product weight and, thereby, reducing loss due to product weight variation and/or waste; and

(c) improving product quality by maintaining constant dough sheet baking characteristics.

## SUMMARY OF THE INVENTION

The present invention is a method and apparatus for maintaining a constant mass flow rate of doughy material in a machining process wherein the doughy material is transferred to elements for machining. The present method includes delivering the doughy mass continuously at a constant mass flow rate to the machining process and between machining elements therein, and continuously adjusting each of the machining elements in the process responsive to changes in transfer characteristics of the dough at each of the machining elements in order to independently maintain the constant mass flow rate through each machining element.

In a preferred embodiment of the invention, it is contemplated that the doughy mass can be continuously delivered at a constant mass flow rate by feeding the doughy mass in a continuous sheet onto a conveying means which

initiates the dough machining process, continuously measuring the mass of the dough fed onto the conveying means per unit time, while continuously comparing the mass per unit time to a set standard of mass per unit time and regulating the feeding of the continuous sheet of dough to maintain the set standard of mass per unit time. In this embodiment, the dough can be fed in a continuous sheet by extruding the doughy mass with sheeting compression rolls which are adjustable for increasing and decreasing the mass flow rate of the dough therethrough.

One way that the mass can be measured is by continually weighing the amount of dough deposited on the conveying means which conveys the sheet of dough at a constant rate of travel. This weight per unit time can be compared to a set standard of mass per unit time by continually generating a signal corresponding to the measured mass per unit time, matching the generated signal to a set standard signal which indicates the selected mass flow rate, and transmitting a signal corresponding to any detected difference between the set standard and the measured amount of mass per unit time to a means for regulating the feeding of the continuous sheet of dough.

While there are several ways of regulating the feeding of the dough mass onto the conveying means, one way includes changing the extrusion speed of the rolls or changing the roll-to-roll distance between the rolls or a combination of both of the above adjustments. These adjustments are, of course, made in response to the transmitted differentiation signals so that the rate of feeding the dough mass is increased and decreased to correct the rate to the set standard flow rate. Specifically, if the differentiation signal indicates a deficiency in the mass flow rate, the adjustment can include increasing the feeding speed of the rolls, increasing the roll-to-roll distance or a combination of both, while a differentiation signal indicating an excess in the mass flow rate can generate an adjustment by decreasing the feeding speed of the rolls, decreasing the roll-to-roll distance or a combination of both.

In one of the preferred embodiments of the invention, it is contemplated that the machining process will include at least three machining operations to reduce the size of the sheet of dough, each of the machining operations preceded by a dough transfer operation, along with continuously monitoring the level of the sheet of dough at a point, or positions, associated with each of the machining operations. A continuous signal is generated corresponding to the dough sheet level at each machining operation and compared to a set standard signal designating the desired dough sheet level, while a signal corresponding to any difference between the two can be transmitted to a means for adjusting each of the machining operations to correct detected differences in the level of the doughy sheet and thus mass flow rate.

Usually this type of system is used in combination with a cutting operation in which the machined sheet of dough attains a constant thickness at the end of the operation for cutting prior to baking, as in biscuits, wafer and/or cookie making, etc. When such a cutting operation is included after the last of the machining steps, a monitoring operation also can be included which continuously measures the thickness of the sheet or the weight of dough on the conveyor immediately before the cutting operation and compares the measured thickness of the sheet to a set standard thickness. This measurement can be used to determine whether or not the product will have the desired thickness.

Continuous monitoring operations contemplated for use in the present invention includes mechanical gauge devices or by continually transmitting a detection signal against the surface of the sheet of dough and continually reading the travel distance of the transmitted signal. The transmitted signal can be a soundwave and/or an electromagnetic wave. The measured travel distance is then compared to the travel distance corresonding to the correct level of dough sheet.

Each of the machining operations can include rolling the sheet of doughy material between a set of transmitting compression rolls which are adjustable for accommodating the rate of flow of dough therethrough, such as by changing the speed of the rolls, changing the roll-to-roll distance between the rolls and/or a combination of both the aforesaid adjustments.

An apparatus useful for the present machining process includes a means for continuously delivering doughy material at a constant mass flow rate to at least one machining element in a dough machining process, and a means for adjusting the at least one machining element responsive to changes in transfer characteristics of the dough associated with each element in order to maintain constant mass flow rate therethrough. The means for continuously delivering the doughy material at a constant rate can include adjustable extrusion rollers mounted at the exit of the dough containing vessel for extruding a continuous sheet of dough, conveying means for continuously introducing the continuous sheet of dough resulting from the extrusion rolls to the at least one machining element at a constant rate of speed, mass detection means which measures the mass of dough product travelling on the conveying means and continually transmits a signal corresponding to the measured mass unit time, a comparator which receives the transmitted signal of measured mass per unit time, compares it to a set standard signal representing a designated mass per unit time, and generates command signals representing the difference between the set standard signal and the transmitted measured signal, and means for regulating the extrusion rollers connected for actuation to the extrusion rollers. The regulating means receives the command signals and adjusts the extrusion rollers in response to such command signal to correct the mass flow rate. The adjustment can include one of changing the extrusion speed of the rolls, changing the roll-to-roll distance between the rolls and/or a combination of both of the aforesaid adjustments.

In one preferred embodiment of the invention, a comparator can be a computer and/or a solid state circuit, including microchip(s), on which a comparison program has been entered. In general, the mass detection means can be a simple weight measuring device which measures the weight travelling on the conveyor per unit time.

In the present apparatus, the machining element can be a set of transmitting compression rolls, and preferably there are three such rolls in the overall system.

Also in a preferred embodiment of the invention, the means for adjusting the rate of mass flow through each of the transmitting compression rolls includes an electrical scanning device which continuously scans the surface of the sheet of dough, detects variations in the surface of the dough sheet, and transmits a signal corresponding to variations in the sheet of dough, and a means for changing one of the transmitting speed of the rolls, the roll-to-roll distance therebetween or a combination of both such changes in response to the transmitted signals so that the mass flow is maintained at a constant level. The scanning device can, in one mode of the invention, be an optical scanner.

As a result of the invention, a highly controlled mass flow rate can be set by an operator utilizing the present apparatus and the set mass flow rate may be maintained at a very accurate level throughout continuous operation of the system. This is to be contrasted to the disclosure of United Kingdom application 2,078,403A wherein the conveying operations of the process such as endless belt conveying is adjusted to change the rate of feed of the dough to the gage rollers, rather than transferring a constant mass flow rate of dough by changing the gage roller machining element operation in response to variations in the dough transfer characteristics as in the present process.

Consequently, a dough machining control system provides consistent, reliable dough feed to an oven.

## BRIEF DESCRIPTION OF THE DRAWINGS

A preferred embodiment of the invention has been chosen for purposes of illustration and description and is shown in the accompanying drawings wherein:

Fig. 1 is a schematic view of an overall system for machining dough in accordance with the present invention; and

Fig. 2 is a graph showing the accuracy of the present invention in providing a constant mass flow rate of dough sheet.

## DETAILED DESCRIPTION OF THE INVENTION

The present invention which is the culmination of years of study with regard to process variables designed to maintain uniform weight distribution of a final product, provides a dough machining system in which a highly controlled mass flow rate is maintained. This type of control is believed to be the most critical parameter in a dough machining process, especially for biscuit dough, in order to maintain high efficiency and product quality. Among other things, it has been found that since the density of dough sheet is sufficiently constant, the thickness is an indicator of piece weight.

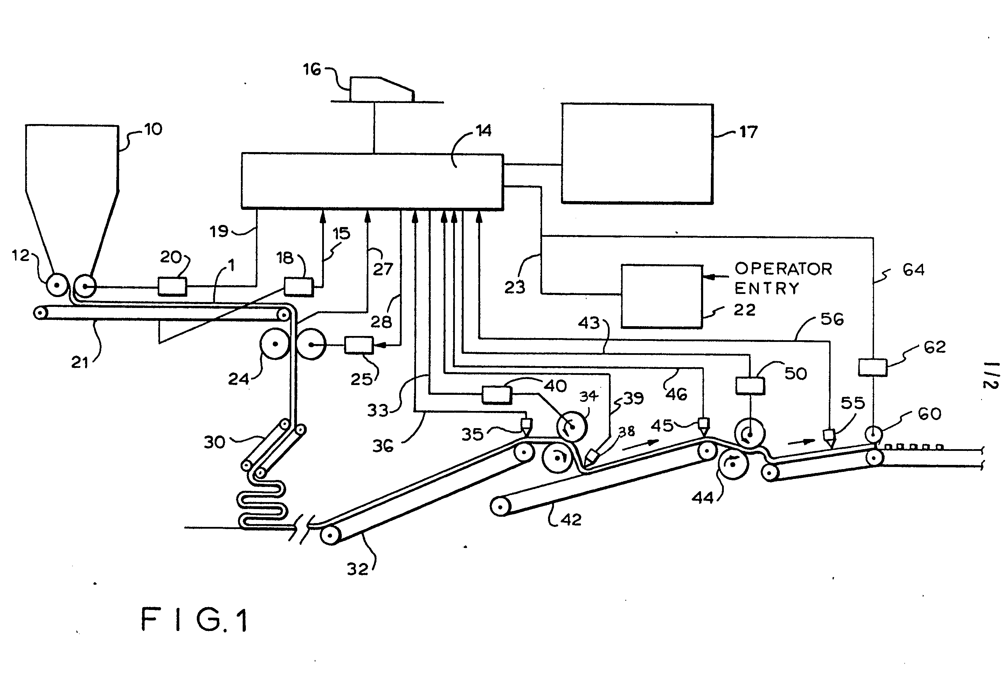

Referring to the drawings, Fig. 1 shows a schematic view of a preferred embodiment of the present invention wherein a doughy material contained in a hopper 10 is fed to a continuous dough machining process by means of serrated hopper rolls 12 located at the exit of the hopper 10. It is important that the flow at the beginning of the process be carefully monitored and maintained in order to initiate a constant mass flow feed to the system. To this end a feed forward closed loop control is provided which includes a weight belt 21 on which an accurate pounds per minute meter reading is taken and transmitted to a comparator 14 shown at the middle of the drawing, which can, in one embodiment, be a computer having a readout 17 or printer 16, and/or can include a mini computer system containing microchips utilizing a memory and logic command signals. The rate of travel of belt 21 can be set and adjusted by control 18.

In any event, the weight per unit time measured on weight belt 21 is transmitted to the comparator 14 on transmission line 15 in which a set standard mass per unit time has been programmed. The measured rate is compared to the set rate and a continuous signal is generated indicating any difference between the set and measured signals. The signal is then forwarded along line 19 to extrusion roll regulator 20 whereby the mass flow of doughy material extruded onto the conveying means can be either increased or decreased in order to adjust the mass flow rate to the desired amount. In the case of biscuit dough, the amount of pounds per minute of the sheeted dough slab can be about 150 lbs. per minute. The mass flow feed rate, whatever it may be, can be entered by an operator on a control panel 22 such as that shown at the right of the comparator in the figure.

As the sheet of dough 1 leaves the weight belt 21, it enters a first machining/transmitting step which is shown here by compression rolls 24, which are regulated by control 25. These rolls can be controlled to compensate for variation in dough transfer characteristics by use of a sensor mounted at the inlet of the rolls 24 which detects changes in the level of the dough at that point. As shown herein, such a sensor can be an optical scanner or any other type of electronic scanner which directs a signal onto the surface of the dough. The embodiment shown here includes an optical scanner 26 which directs a signal at the surface of the dough sheet and receives a return signal corresponding to the distance between the scanner and the dough. When there is a variation in the dough which causes the sheet to either buckle or pucker, a variation signal is sent to the comparator 14 along line 27 where it is compared to a standard dough sheet level. If a difference is detected, a command signal is forwarded along line 28 to control 25 which adjusts the speed and/or roll-to-roll gap of the rolls 24 in order to correct the variation. In order to prevent overcompensation of the transmitting devices it may be necessary to program delayed readings and/or instructions after a given error signal is generated.

In the embodiment of the invention shown in the drawing, the reduced dough sheet can then be picked up by another transfer device such as a laminator 30 which uniformly deposits the dough in layers on conveyor belt, preferably, in most cases, between 3 and 6 layers, and most preferably 4 layers. This can be accomplished by the laminator swinging back and forth in the direction of the arrow as the dough sheet progresses therethrough so that the layers are deposited in series on the next conveyor.

In this embodiment, the laminator deposits the dough on an inclined conveyor 32, the speed of which is maintained at a constant rate which is proportional to the cutter speed in the case of a dough machining line having a cutter 60, and is not independently adjustable. The cutter speed can also be entered by the operator on control 22 which is connected to comparator 14 by through input line 23, and which is connected to cutter control 62 through line 64. The laminating speed is also maintained at a constant rate proportional to the cutter speed. Generally, it is important to understand that none of the transfer devices have a storage capacity. Thus, the machining process is limited to controlling dough sheet thickness and velocity at each machining operation.

The dough sheet is then conveyed on endless belt 32 at an incline to a second machining operation performed by auxiliary compression rolls 34. The auxiliary rolls 34 in this embodiment of the invention can be independently controlled by two sensoring stations, an infeed monitoring station 35 and a dough loop monitoring station 38 both of which monitor the surface of the dough. The monitoring scanners detect differences in the level of the dough by transmitting a continuous signal along respective monitoring transmission lines 36 and 39 to the comparator which measures it against the desired dough level and issues a command signal along line 33 to a control 40 which adjusts the auxiliary rolls to increase or decrease the speed and thickness of the dough sheet traveling therethrough to correct any detected variations. These adjustments, which can be made by changing the speed and/or the roll-to-roll gap of the auxiliary compression rolls 34, effectively maintain constant mass flow rate through the second machining station.

The dough sheet is then picked up by second inclined conveyor 42 and introduced to a third machining operation performed by gauge rolls 44. Optionally, a dough level monitor 45 can be included with gauge rolls 44, which transmits a continuous measuring signal on the level of the sheet of dough along line 46 to the comparator which, in turn, issues command signals along line 43 to control 50 in order to maintain constant constant mass flow through the gauge rollers by adjusting the speed and/or roll-to-roll gap between gauge rolls 44.

A final thickness reading can be taken by monitor 55 and a continuous signal sent along line 56 to the comparator, which is, once again, preferably a computer, to determine consistent product thickness.

Readings which are available from the computer can include items such as pounds per minute, cutter speed, final dough thickness, auxiliary roll speed, auxiliary roll gap, auxiliary roll power consumption, gauge roll speed, gauge roll gap, gauge roll power consumption and piece weight.

In operation, the present system will detect the variation in the dough transfer characteristics which can be induced by variation in types of dough, variations in the consistency of the dough, recipe variation in the same type of dough, and processing additives such as flour, to change viscosity and/or reduce sticking, etc. These variations are detected by changes in the level of the surface of the dough. In order to maintain a consistent mass flow rate therethrough, each of the transmitting transfer devices, i.e., the machining elements 24, 34 and 44 can be adjusted by roll speed and/or gap to accommodate the variation in transfer characteristics.

It has been found that reduction rolls have a limited effect in controlling side-to-side variation in flow weight. Moreover, power consumption of compression rolls does not adequately indicate mass flow since the majority of the power at that point is compressive power -- not associated with transferring momentum to the dough -- and, consequently, cannot be used as a control variable. Power demands may be useful, however, as an index of dough consistency.

Since the mass flow as set by the operator and controlled by the extrusion feed system is constant, it is necessary to have the ability to adjust for the variant dough transfer characteristics in order to maintain a constant mass flow rate through the process, which is exactly what the present invention enables the operator to perform.

## EXAMPLES

In order to determine the predictability of the mass flow rate using the present invention, runs were made with a standard biscuit type dough wherein the predicted flow rate was compared to the observed flow rate. The biscuit dough formula used was as follows:

| Ingredient | Percent by Weight |
|---|---|
| Flour | 76.0% |
| Water | 22.0% |
| Other Ingredients | 2.0% |
| | 100.0% |

The ingredients were mixed for up to about 15 minutes at about 75° F. The resulting dough sheet had a moisture level of about 30-31%.

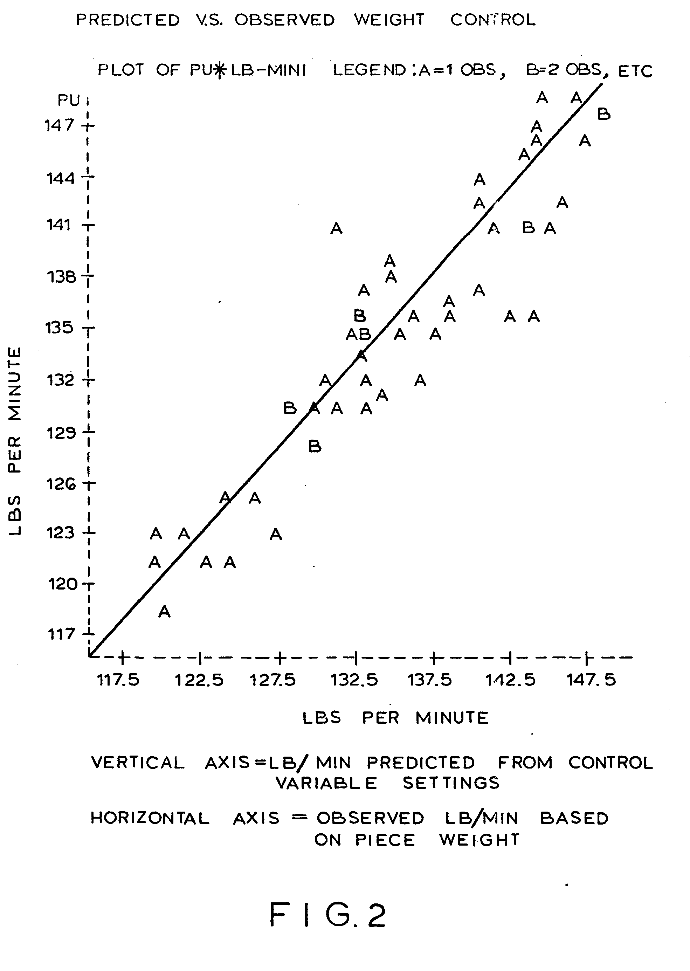

The results of these runs are shown in Fig. 2. which is a graph wherein the vertical axis represents pounds per minute predicted from control variable settings, whereas the horizontal axis equals observed pounds per minute based on piece weight. In a perfect system, the plot of the predicted flow rate against the observed flow rate would, of course, be the diagonal line starting from lower left and proceeding diagonally straight to the upper right-hand side of the graph. The letters A and B represent the observed flow rates for the dough at various settings. Predicted flow rates shown along the vertical axis are a function of speed and gap setting. Thus, upon review of the results, it can be seen that over the entire range studied the observed results closely resembled predicted results. Since the flow rate can be predicted from roll adjustments, consequently necessary adjustments can be adequately prescribed to maintain constant mass flow rate.

## CLAIMS

1.  A method of maintaining a constant mass flow rate of doughy material in a machining process which includes transferring said dough material to elements for machining said doughy material, comprising:

delivering doughy mass continuously at a constant mass flow rate to said machining process,

conveying said dough mass between said machining elements at a constant rate; and

continuously adjusting each said machining element in said process independently in response to changes in transfer characteristics of the dough at each said machining element to maintain flow rate through each said machining element.

2.  The method of Claim 1, wherein said doughy mass is continuously delivered at a constant mass flow rate by feeding said doughy mass in a continuous sheet onto conveying means which initiates said dough machining process, continuously measuring the mass of said dough fed onto said conveying means per unit time, continuously comparing said mass per unit time to a set standard of mass per unit time, and continuously regulating said feeding to maintain said set standard of mass per unit time.

3. The method of Claim 2, wherein said feeding said dough in a continuous sheet comprises extruding a doughy mass with sheeting compression rolls which are adjustable for increasing and decreasing the flow rate of dough therethrough.

4. The method of Claim 3, wherein said continuous measuring the mass of said dough per unit time comprises continually weighing the amount of dough deposited on said conveying means which conveys said sheet of dough at a constant rate of travel.

5. The method of Claim 4, wherein said continuous comparing said mass per unit time to a set standard of mass per unit time comprises continually generating a signal corresponding to said measured mass per unit time, matching said generated signal against a set standard signal which indicates the selected mass flow rate, and transmitting a signal corresponding to detected differences between said set standard and said generated signal to a means for regulating said feeding of said continuous sheet of dough.

6. The method of Claim 5, wherein said regulating said feeding comprises changing the extrusion speed of said rolls or changing the roll-to-roll distance between said extrusion rolls, or both, in response to said transmitted differentiation signal whereby said rate of feeding dough mass is increased and decreased to correct said rate to the set standard flow rate.

7. The method of any one of Claims 2-6, wherein said machining process further comprises machining said doughy material at least three times to reduce the size of the sheet of dough, each said machining operation being preceded by a dough transfer operation, continuously monitoring the level of the sheet of dough at a point associated with each said machining operation, generating a continuous signal corresponding to said dough sheet level, continuously comparing said generated signal to a set standard signal designating the desired dough sheet level, transmitting a signal corresponding to differences between said set standard and said generated signal, and adjusting each said machining operation to correct detected differences in mass flow rate therethrough whereby said mass flow rate is maintained at a constant rate through each said machining operation.

8. The method of Claim 7, wherein said process further includes cutting said sheet of dough on a conveyor means after the last of said machining steps, monitoring the thickness of the sheet of dough on said conveyor immediately before said cutting operation, comparing the measured thickness of said sheet to a set standard of thickness, and adjusting said machining process to produce said standard thickness.

9. The method of Claim 7, wherein said continuous monitoring comprises continually transmitting a detection signal against the surface of said sheet of dough and continually reading the travel distance of said transmitted signal.

10.  The method of Claim 9, wherein said transmitted signal comprises sound wave.

11.  The method of Claim 9, wherein said transmitted signal comprises light waves.

12.  The method of any one of Claims 7-11, wherein each said machining operation comprises rolling said sheeted doughy material between a set of transmitting compression rolls which are adjustable for accommodating the rate of flow of dough sheet therethrough.

13.  The method of Claim 12, wherein said adjusting comprises changing the speed of said rolls, or changing the roll-to-roll distance between said transmitting rolls, or both, in response to differentiation signals.

14.  An apparatus for machining doughy material at a constant mass flow rate comprising:

means for continuously delivering doughy material to at least one machining element in a dough machining process at a constant flow rate; and

means for adjusting the rate of mass flow through said at least one machine element responsive to changes in transfer characteristics of the dough associated with said element to maintain said mass flow rate.

15. The apparatus of Claim 14, wherein said means for continuously delivering doughy material comprises:

adjustable extrusion rollers mounted at the exit of a dough-containing vessel for extruding a continuous sheet of dough,

conveying means for continuously introducing the continuous sheet of dough resulting from said extrusion rolls to said at least one machining element at a constant rate of travel,

mass detection means which measures dough product travelling on said conveying means and continually transmits a signal corresponding to said measured mass per unit time,

a comparator which receives said transmitted signal of measured mass per unit time, compares said transmitted signal to a set standard signal corresponding to a designated mass per unit time, and generates command signals representing the difference between said set standard signal and said transmitted measured signal, and

means for regulating said extrusion rollers connected for actuation to said extrusion rollers which receives said command signals and adjusts said extrusion rolls in response thereto to correct mass flow rate by changing the extrusion speed of said rolls, or changing the roll-to-roll distance between said rolls, or both.

16. The apparatus of Claim 15, wherein said computer is one of a computer and a solid state printed comparison program.

17. The apparatus of Claim 15, wherein said mass detection means is a weight measuring device.

18. The apparatus of Claim 14, wherein each said machining element comprises transmitting compression rolls.

19. The apparatus of Claim 18, wherein said means for adjusting the rate of mass flow through each said set of transmitting compression rolls comprises an electrical scanning device which continuously scans the surface of said sheet of dough, detects variations in the surface of said dough sheet, and a means for changing the transmitting speed of said rolls, or the roll-to-roll distance between said rolls, or both, in response to said transmitted signal whereby said mass flow is maintained at a constant level.

20. The apparatus of Claim 19, wherein said scanning device comprises an optical scanner.

FIG. 1

OPERATOR ENTRY

U182563

1/2

2/2

PREDICTED V.S. OBSERVED WEIGHT CONTROL

PLOT OF PU*LB-MINI    LEGEND : A=1 OBS, B=2 OBS, ETC

VERTICAL AXIS = LB/MIN PREDICTED FROM CONTROL
VARIABLE SETTINGS

HORIZONTAL AXIS = OBSERVED LB/MIN BASED
ON PIECE WEIGHT

FIG.2